# EUROPÄISCHE PATENTANMELDUNG

(11) **EP 1 359 740 A1**
(43) Veröffentlichungstag der Anmeldung: **05.11.2003**
(21) Anmeldenummer: 02009754.9
(22) Anmeldetag: 30.04.2002
(51) Int. Cl.: H04N 1/387, H04N 1/60, H04N 1/46, H04N 1/21

(54) **Vorrichtung und Verfahren zum Verarbeiten von Bildern**

(71) Anmelder: Agfa-Gevaert AG, 51373 Leverkusen (DE)
(72) Erfinder: Schindler, Hans-Georg, 83607 Holzkirchen (DE)

(57) **Zusammenfassung**

Die vorliegende Erfindung betrifft eine Vorrichtung (L) und ein Verfahren zum Verarbeiten von Bildern (B1 - B7) eines fotografischen Auftrages. Mittels eines Steuermittels (SM) wird diese Verarbeitung gesteuert. Ein Feststellmittel (FM) stellt das Vorhandensein oder Nichtvorhandensein einer Eigenschaft (PAN, RA, DCD) eines der Bilder (B1 - B7) des fotografischen Auftrages fest. Ein Sortiermittel (AS) sortiert eines der Bilder (B1 - B7) in dem Fall automatisch aus, in dem das Vorhandensein oder Nichtvorhandensein der Eigenschaft (PAN, RA, DCD) von dem Feststellmittel (FM) nicht eindeutig feststellbar ist.

## Beschreibung

Die vorliegende Erfindung betrifft eine Vorrichtung und ein Verfahren zum Verarbeiten von Bildern eines fotografischen Auftrages.

Aus der DE 199 21 418 A1 sind eine Vorrichtung und ein Verfahren bekannt, bei denen Bilder eines fotografischen Auftrages verarbeitet werden. Dem bekannten fotografischen System werden digitale Bilddaten von Bildern eines fotografischen Auftrages zugeführt. Diese digitalen Bilddaten werden anschließend zu einem Steuermittel weitergeleitet, das mittels bestimmter Verarbeitungsalgorithmen die digitalen Bilddaten verarbeitet. Zur Verarbeitung der einzelnen Bilder werden diese analysiert und das Vorhandensein oder Nichtvorhandensein bestimmter Eigenschaften der Bilder ermittelt. Dabei kann beispielsweise festgestellt werden, dass ein Bild über- oder unterbelichtet ist. Eine auf einem Bild dargestellte Person kann des Weiteren rote Augen haben, die durch eine Blitzaufnahme entstehen können. Nach dem Ermitteln der Eigenschaften von einzelnen Bildern können diese mittels der Verarbeitungsalgorithmen korrigiert werden. Die Korrektur erfolgt dabei vollkommen automatisch. Die korrigierten Bilddaten der einzelnen Bilder werden anschließend an ein Ausgabemittel weitergeleitet, mit dem die Bilder oder die ihnen zugeordneten Bilddaten auf ein Ausgabemedium ausgegeben werden. Beispielsweise kann das Ausgabemittel ein digitales Belichtungsmittel sein, mit dem die Bilder auf Fotopapier belichtet werden. Ebenso ist es möglich, eine Ausgabe auf CD-ROM durchzuführen.

Es ist die Aufgabe der vorliegenden Erfindung, eine Vorrichtung und ein Verfahren zum Verarbeiten von Bildern eines fotografischen Auftrages anzugeben, wobei auf einfache Weise eine gute Qualität bei der Verarbeitung der Bilder ermöglicht werden soll.

Diese Aufgabe wird gemäß der technischen Lehre des Anspruchs 1 oder des Anspruchs 12 gelöst.

Gemäß der vorliegenden Erfindung soll das Vorhandensein oder Nichtvorhandensein einer bestimmten Eigenschaft eines der Bilder festgestellt werden. Ist dieses Feststellen der Eigenschaft bei einem der Bilder nicht eindeutig möglich, so kann dieses Bild aussortiert werden. Das aussortierte Bild wird somit aus dem herkömmlichen Verarbeitungsprozess automatisch herausgenommen, den es ansonsten durchlaufen würde, sofern ein Vorhandensein oder Nichtvorhandensein der Eigenschaft festgestellt worden wäre. Als Eigenschaften können alle Eigenschaften gelten, die ein Bild eines fotografischen Auftrages haben kann. Dies sind insbesondere das Vorhandensein roter Augen, die bei Blitzlichtaufnahmen entstehenm können, das Vorliegen von Farbstichen, von Unschärfen, von Unter- oder Überbelichtungen einzelner Bilder oder eventuell ganzer Aufträge, das Bildformat der jeweiligen Bilder, insbesondere ob es sich um ein Kleinbildvollformat oder ein Kleinbildpanoramaformat handelt, oder die Bildorientierung, die insbesondere bei der Ausgabe von Bilddaten der Bilder des fotografischen Auftrages auf CD relevant ist.

Auf Grund der vorliegenden Erfindung können Bilder, bei denen die korrekte und optimale Verarbeitung nicht notwendigerweise gewährleistet ist, aussortiert werden. Die aussortierten Bilder können dann einer Sonderbehandlung und einer genaueren Untersuchung unterworfen werden, um dadurch das Vorhandensein oder Nichtvorhandensein der bestimmten Eigenschaft besser feststellen zu können. Die Verarbeitung der Bilder des fotografischen Auftrages kann somit optimiert und ihre Qualität erhöht werden. Eine falsche Verarbeitung der Bilder oder eine falsche Korrektur bestimmter Eigenschaften der Bilder auf Grund eines nicht korrekten Erkennens dieser Eigenschaft kann somit besser vermieden werden. Da das Aussortieren der Bilder erfindungsgemäß automatisch erfolgt, ist es möglich, den Einsatz von Personal bei der Verarbeitung der Bilder zu optimieren. Bilder, bei denen bestimmte Eigenschaften zweifelhaft sind, können effizient weiterbehandelt werden.

In einer vorteilhaften Ausgestaltung der Erfindung wird das aussortierte Bild einer Anzeigeeinrichtung zugeführt. Auf dieser Anzeigeeinrichtung kann das Bild angezeigt und durch eine Bedienperson überprüft werden. Der Bedienperson werden somit ausschließlich solche Bilder zugeleitet, deren Eigenschaften zweifelhaft sind. Die Bedienperson überprüft ausschließlich diejenigen Bilder, bei denen bestimmte Eigenschaften nicht eindeutig feststellbar sind. Es ist nicht notwendig, dass die Bedienperson alle Bilder eines fotografischen Auftrages auf das Vorhandensein oder Nichtvorhandensein der Eigenschaft überprüft. Einfachheitshalber kann die Anzeigeeinrichtung einen Monitor umfassen. Es ist möglich, dass die erfindungsgemäße Vorrichtung mehrere Anzeigeeinrichtungen umfasst, die insbesondere von mehreren Bedienpersonen bedient werden können.

Vorteilhafterweise ist ein Bearbeitungsmittel zur manuellen Bearbeitung des aussortierten Bildes vorhanden. Damit kann eine Bedienperson auf einfache Weise selbst Korrekturen in dem aussortierten Bild vornehmen oder aber beispielsweise Positionen auf dem aussortierten Bild kennzeichnen, die anschließend von dem Steuermittel einer Verarbeitung unterzogen werden.

In einer besonders vorteilhaften Ausgestaltung der Erfindung, kann der Grad der Zweifelhaftigkeit beim Feststellen der Eigenschaft des Bildes eingestellt werden. Dieser Grad dient dann als Kriterium für das Aussortieren des Bildes. Das heißt, ist beispielsweise bei der Beurteilung und Bewertung des jeweiligen Bildes bis zu einer bestimmten Wahrscheinlichkeit, die dem eingestellten Grad der fehlenden Eindeutigkeit entspricht, das Vorhandensein einer bestimmten Eigenschaft des Bildes festgestellt worden, so wird die Weiterverarbeitung dieses Bildes dann einer dieser Eigenschaft zugeordneten Verarbeitung zugeführt. Erreicht die Wahrscheinlichkeit, dass diese Eigenschaft bei dem untersuchten Bild vorliegen könnte, den eingestellten Grad der fehlenden Eindeutigkeit nicht, so wird die Weiterverarbeitung des Bildes einer anderen Verarbeitung zugeführt, die für den Fall vorgesehen ist, dass das Bild eine solche Eigenschaft nicht aufweist. Auf Grund der Erfindung ist es insbesondere möglich, den Grad der fehlenden Eindeutigkeit veränderlich einstellbar einzurichten. Dies kann insbesondere automatisch durch die erfindungsgemäße Vorrichtung erfolgen. Dadurch kann die Flexibilität weiter erhöht werden. Eine Anpassung an bestimmte Gegebenheiten ist so auf einfache und effektive Weise möglich. Einfachheitshalber kann der Grad der fehlenden Eindeutigkeit durch Schwellwerte festgelegt werden.

In einer weiteren besonders vorteilhaften Ausgestaltung der Erfindung wird das automatische Aussortieren des Bildes zusätzlich zu der Frage, ob eine bestimmte Eigenschaft vorhanden oder nicht vorhanden ist, in Abhängigkeit von einem weiterem vorgegebenen Kriterium durchgeführt. Dadurch ist es möglich, das Bild auszusortieren, obwohl das Vorhandensein oder Nichtvorhandensein der Eigenschaft eindeutig festgestellt werden konnte. Des Weiteren ist es aber ebenso möglich, das Bild nicht auszusortieren, obwohl das Vorhandensein oder Nichtvorhandensein der Eigenschaft eindeutig festgestellt wurde. Dadurch kann eine weitere Erhöhung der Flexibilität gewährleistet werden. Die Verarbeitung von Bildern des fotografischen Auftrages kann, je nach Anwendungsfall, spezifisch ausgestaltet werden.

Vorteilhafterweise kann die Rate, mit der die Bilder aussortiert werden, festgelegt werden. Dadurch können ganz flexibel mehr oder weniger Bilder, je nach Anwendungsfall, aussortiert werden. Das Festlegen der Aussortierrate kann insbesondere automatisch erfolgen. Die Aussortierrate kann beispielsweise in Abhängigkeit von der Auslastung einer Bedienperson festgelegt werden. Damit kann ein guter Kompromiss zwischen einem effizienten Einsatz einer Bedienperson und der Anzahl qualitativ sehr hochwertig verarbeiteter Bilder festgelegt werden. Es ist auch möglich, die Aussortierrate durch entsprechend hohe oder niedrige Schwellwerte festzulegen. Auch eine Kombination verschiedener Kriterien zum Festlegen der Aussortierrate kann einstellbar sein.

Vorteilhafterweise kann das Aussortieren der Bilder ausgesetzt werden, sofern das Steuermittel ein Weiterverarbeiten der Bilder des fotografischen Auftrages fordert. Dadurch ist es insbesondere möglich, die Kapazität bei dem Verarbeiten von Bildern optimal auszunutzen. Beispielsweise ist es dadurch möglich, die Auslastung der Ausgabemittel, insbesondere eines digitalen Printers zur Belichtung von Fotopapier, zu optimieren. Die Ausgabe der Bilder mittels des Ausgabemittels soll nicht deswegen unterbrochen werden, weil zu viele Bilder aussortiert wurden, und daher zur weiteren Verarbeitung durch das Ausgabemittel nicht zur Verfügung stehen, da zuvor beispielsweise eine manuelle Bearbeitung durch eine Bedienperson nötig ist.

Durch ein Festlegen einer Priorität, mit der die verschiedenen Eigenschaften der Bilder aussortiert werden, ist eine weitere Optimierung und effektive Verarbeitung der Bilder möglich. Dadurch kann beispielsweise festgelegt werden, dass Bilder, die eine Eigenschaft aufweisen, die einer hohen Aussortierpriorität zugeordnet sind, aussortiert werden, bevor Bilder mit einer Eigenschaft, die einer weniger hohen Aussortierpriorität zugeordnet sind, aussortiert werden. Dies kann vorteilhafterweise zu einem optimalen Kompromiss zwischen der Auslastung, beispielsweise der Ausgabemittel zum Ausgeben der Bilder, und dem Erzeugen einer großen Anzahl von qualitativ hochwertigen Bildern führen. Das Festlegen der Priorität kann insbesondere auch mit einer Festlegung des Grads der fehlenden Eindeutigkeit, insbesondere durch entsprechende Festlegung von Schwellwerten, kombiniert werden.

Im Folgenden werden die Erfindung und ihre Vorteile an Hand von Ausführungsbeispielen und den Zeichnungen beschrieben. Es zeigen:
- Fig. 1: ein erstes Ausführungsbeispiel einer erfindungsgemäßen Vorrichtung,
- Fig. 2: ein Beispiel einer bestimmten Eigenschaft eines Bildes und einer Festlegungen von Schwellen zum Feststellen des Vorhandenseins oder Nichtvorhandenseins der Eigenschaft,
- Fig. 3: ein Beispiel von Bildern, denen verschiedene Prioritäten zum Aussortieren zugeordnet werden, und
- Fig. 4: ein Beispiel von aussortierten Bildern, geordnet nach ihnen zugeordneten Prioritäten.

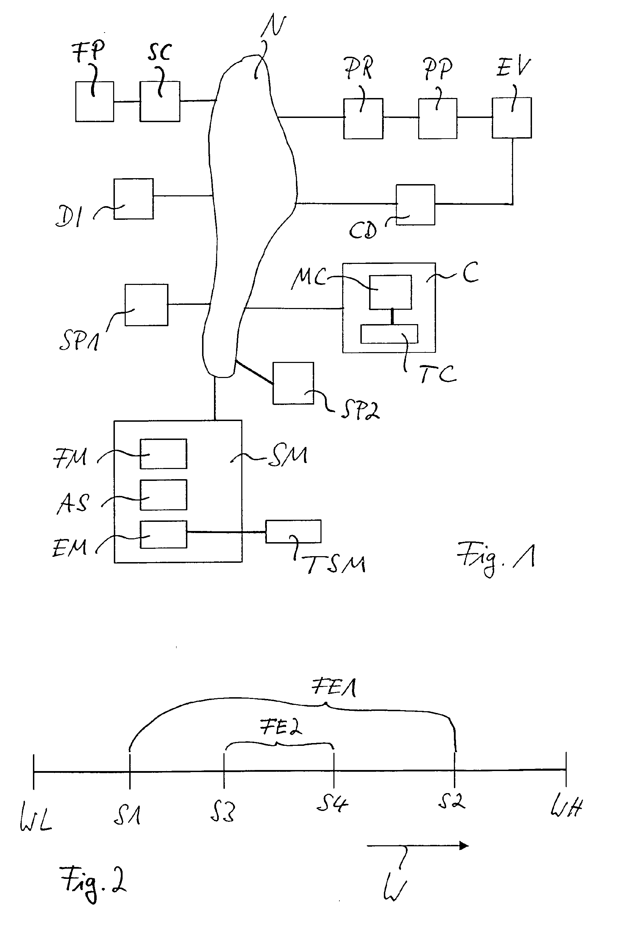

Die Fig. 1 zeigt das erste Ausführungsbeispiel der erfindungsgemäßen Vorrichtung. Es ist ein fotografisches System L dargestellt, das in einem Photofinishing-Labor realisiert sein kann. Das System L enthält verschiedene Eingabemöglichkeiten für die Eingabe von fotografischen Aufträgen. Stellvertretend ist in dem Ausführungsbeispiel gemäß der Fig. 1 ein Filmentwickler FP, zum Entwickeln von fotografischem Film, und ein an den Filmentwickler angeschlossener Scanner SC zum Abtasten der entwickelten fotografischen Filme vorhanden. Des Weiteren enthält das System L gemäß der Fig. 1 eine digitale Eingabeschnittstelle Dl zum Eingeben von digitalen Bilddaten. Die digitale Eingabeschnittstelle kann beispielsweise eine Schnittstelle zu einem Netzwerk, wie dem Internet, oder auch eine CD-Lesestation zum Lesen von CDs sein. Darüber hinaus sind andere Eingabeschnittstellen zum Eingeben von fotografischen Aufträgen möglich. Der Scanner SC und die digitale Eingabeschnittstelle DI sind an ein Netzwerk N angeschlossen. Der Scanner SC erzeugt digitale Bilddaten entsprechend der in den abgetasteten fotografischen Bildvorlagen, das heißt hier in Fotonegativen, enthaltenen Bildinformationen. Die von dem Scanner SC erzeugten Bilddaten oder die über die digitale Eingabeschnittstelle in das System L eingegebenen digitalen Bilddaten werden in dem System L verarbeitet. In einem an das Netzwerk N angeschlossenen ersten Speicher SP1 können die digitalen Bilddaten zwischengespeichert werden. Im vorliegenden Ausführungsbeispiel werden bereits mittels einer Bildverarbeitung verarbeitete Bilddaten in dem ersten Speicher SP1 abgelegt.

Die Verarbeitung der digitalen Bilddaten wird von einem Steuermittel SM gesteuert, das ebenfalls an das Netzwerk N angeschlossen ist. Das Steuermittel SM steuert die generelle Verarbeitung des in das System L eingegebenen fotografischen Auftrages. Dazu gehört u. a. die Verteilung der zu den jeweiligen fotografischen Aufträgen gehörenden digitalen Bilddaten und anderer Bestandteile des jeweiligen Auftrages zwischen den verschiedenen Komponenten des Systems L. Das Steuermittel SM dient zum Verarbeiten der digitalen Bilddaten mittels vorgegebener bestimmter Verarbeitungsalgorithmen. Dazu können in dem System L Speicher (nicht dargestellt) vorhanden sein, in denen die Verarbeitungsalgorithmen abgespeichert sind und auf die das Steuermittel zugreifen kann, um die Verarbeitungsalgorithmen abzurufen. Die Verarbeitungsalgorithmen können beispielsweise eine sogenannte unscharfe Maskierung der Bildinformationen der einzelnen Bilder, eine Korrektur von Unter- oder Überbelichtung, eine Korrektur von Unschärfen, eine Korrektur von bei Blitzlichtaufnahmen entstehenden roten Augen und/oder eine Bildvergrößerung umfassen. Des Weiteren ist es möglich, mittels der Verarbeitungsalgorithmen Auflösungs- oder Formatsänderungen der einzelnen Bilder durchzuführen. Mittels der Verarbeitungsalgorithmen können verschiedene Eigenschaften der einzelnen Bilder des jeweiligen fotografischen Auftrages korrigiert oder verändert werden.

Zum Feststellen der jeweiligen Eigenschaften der Bilder enthält das Steuermittel ein Feststellmittel FM. Mittels dieses Feststellmittels FM können die digitalen Bilddaten der einzelnen Bilder analysiert werden, um dadurch die jeweiligen Eigenschaften des Bildes zu untersuchen und zu ermitteln. Das Feststellmittel FM stellt beispielsweise fest, ob in einem Bild rote Augen und/oder eine Unschärfe enthalten sind. Dabei entsteht das Problem, dass das Vorhandensein oder Nichtvorhandensein einer bestimmten Eigenschaft, z. B. das Vorhandensein von roten Augen, nicht eindeutig bestimmbar ist. Es wird daher eine Wertung der Wahrscheinlichkeit durchgeführt, an Hand der die Wahrscheinlichkeit festgelegt wird, ob die bestimmte Eigenschaft, z. B. die roten Augen, in dem untersuchten Bild vorhanden sind oder nicht. Dazu ist es möglich, Schwellwerte festzulegen, die bestimmte Wahrscheinlichkeiten vorgeben, für die eine bestimmte Eigenschaft mit großer Sicherheit vorliegt oder bei denen die bestimmte Eigenschaft mit großer Sicherheit nicht vorliegt. Das Steuermittel SM enthält ein Einstellmittel EM, mit dem diese Schwellen eingestellt werden können. Eine Tastatur TSM ist an das Einstellmittel EM angeschlossen, damit eine Bedienperson über die Tastatur TSM die Schwellen in das Steuermittel SM eingeben kann.

Abhängig von der Festlegung der verschiedenen Schwellen für das Feststellen des Vorhandenseins oder Nichtvorhandenseins einer bestimmten Eigenschaft eines Bildes können bestimmte Wahrscheinlichkeiten nicht eindeutig dem Vorhandensein oder Nichtvorhandensein der Eigenschaft zugeordnet werden. Bei diesen Wahrscheinlichkeiten besteht daher eine mehr oder weniger große Gefahr, ein Bild fälschlicherweise mit einem bestimmten Verarbeitungsalgorithmus zu verarbeiten, obwohl dies nicht notwendig wäre. Die fälschlicherweise durchgeführte Verarbeitung kann vielmehr zu einer Verschlechterung der Qualität des Bildes führen.

Erfindungsgemäß enthält das Steuemittel SM daher ein Sortiermittel AS, mit dem Bilder, bei denen eine bestimmte Eigenschaft nicht eindeutig festgestellt werden kann, automatisch aussortiert werden. Ein solches aussortiertes Bild wird aus dem normalerweise in dem System L vorgenommenen Verarbeitungszyklus herausgenommen. Die aussortierten Bilder, vielmehr deren digitale Bilddaten, werden auf Grund des Aussortierens durch das Sortiermittel AS in einem zweiten Speicher SP2 in einer bestimmten Reihenfolge abgespeichert. Dazu ist der zweite Speicher SP2 an das Netzwerk N angeschlossen. Die Zwischenspeicherung in dem zweiten Speicher SP2 dient dazu, die aussortierten digitalen Bilddaten anschließend bei Bedarf an einen Inspektionsplatz C weiterzuleiten. Der Inspektionsplatz C ist ebenfalls an das Netzwerk N angeschlossen. Der Inspektionsplatz C enthält einen Monitor MC zum Anzeigen der ihm zugeleiteten Bilder und eine Tastatur TC. Die Tastatur TC wird von einer Bedienperson bedient. Die einzelnen aussortierten Bilder, bei denen das Feststellmittel FM zuvor kein eindeutiges Vorhandensein oder Nichtvorhandensein einer bestimmten Eigenschaft feststellen konnte, werden auf dem Monitor MC dargestellt. Die Bedienperson am Inspektionsplatz C schaut sich das Bild an und entscheidet, ob und ggf. wie das Bild zu korrigieren ist. Dazu kann sie über die Tastatur TC entsprechende Befehle eingeben. Die Bedienperson ist beispielsweise in der Lage, auf Grund der Darstellung des Bildes auf dem Monitor MC festzustellen, ob vom System L automatisch in dem Bild erkannte rote Punkte als rote Augen einer abgebildeten Person korrigiert werden sollen oder nicht. Die Bedienperson ist in der Lage, mittels der Tastatur TC oder einer am Inspektionsplatz vorhandenen Maus entsprechende Anweisungen zu geben, in welchem Bereich des dargestellten Bildes sich rote Augen befinden. Beispielsweise kann das System L mittels eines bestimmten Verarbeitungsalgorithmus' die von der Bedienperson gekennzeichneten Bereiche des Bildes entsprechend korrigieren.

Zur Ausgabe der Bilder auf Ausgabemedien enthält das System L verschiedene Ausgabemittel. Beispielsweise enthält das System L einen digitalen Printer PR, der an das Netzwerk N angeschlossen ist. Der digitale Printer PR ist in der Lage, die Bildinformationen, die in den ihm zugeführten digitalen Bilddaten enthalten sind, auf Fotopapier aufzubelichten, um somit ein fotografisches Bild zu erzeugen. Ein Papierentwickler PP ist an den Printer PR angeschlossen und dient zur Entwicklung des Fotopapiers. Eine sich an den Papierentwickler PP anschließende Endverarbeitung EV dient zum Schneiden der aus dem Papierentwickler PP ausgegebenen Fotopapierbahnen und dem Sortieren der geschnittenen Papierbilder gemäß der in das System L eingegebenen fotografischen Aufträge. In dem System L können weitere digitale Printer und Papierentwickler vorhanden sein. Das System L enthält darüber hinaus beispielhaft eine CD-Station CD. Mit dieser Station CD lassen sich CD-ROMs brennen, auf denen die digitalen Bilddaten der einzelnen fotografischen Aufträge enthalten sind.

Üblicherweise werden die von dem Steuermittel SM automatisch verarbeiteten digitalen Bilddaten, die beispielsweise zuvor von dem Scanner SC erzeugt worden sein können, dem Printer PR und/oder der CD-Station CD zugeleitet. In dem Fall, in dem von dem Steuermittel SM ein Vorhandensein oder nicht Vorhandensein einer bestimmten Eigenschaft genau genug festgestellt werden kann, erfolgt daher keine Ausgabe der digitalen Bilddaten in den zweiten Speicher SP2 und zu dem Inspektionsplatz C. Vielmehr werden die digitalen Bilddaten direkt von dem Steuermittel SM mit den entsprechenden Verarbeitungsalgorithmen verarbeitet und anschließend über das Netzwerk N dem Printer PR und/oder der Station CD zugeleitet. Werden daher von dem Feststellmittel FM beispielsweise rote Augen in einem Bild zuverlässig festgestellt, so können diese roten Augen von dem Steuermittel SM automatisch entsprechend korrigiert werden. Die korrigierten Bilddaten werden anschließend über das Netzwerk N dem Printer PR zur Ausgabe auf Fotopapier zugeleitet.

Fig. 2 zeigt ein Beispiel einer bestimmten Eigenschaft eines Bildes. Diese bestimmte Eigenschaft ist hier das Vorliegen eines Kleinbild-Panoramaformats. In dem Beispiel gemäß der Fig. 2 ist in Richtung des Pfeiles W die Wahrscheinlichkeit des Vorliegens des Panoramaformats aufgetragen. Das heißt, in dem Punkt WL, der am linken Rand der Darstellung aufgetragen ist, liegt mit Sicherheit kein Panoramaformat, sondern das herkömmliche Kleinbild-Vollformat vor. Im Punkt WH, der am rechten Rand der Darstellung eingezeichnet ist, liegt mit Sicherheit das Kleinbild-Panoramaformat vor. Zwischen dem linken Punkt WL und dem rechten Punkt WH liegen bestimmte Wahrscheinlichkeiten für das Vorliegen des Panoramaformats. Diese Wahrscheinlichkeiten werden von einer Verarbeitungslogik bestimmt, die nicht erfindungswesentlich ist und hier nicht weiter erläutert wird.

In der Fig. 2 ist eine erste Schwelle S1 eingezeichnet, die sich rechts neben dem linken Punkt WL befindet. Eine zweite Schwelle S2 ist zwischen der ersten Schwelle S1 und dem rechten Punkt WH eingezeichnet. Die erste Schwelle S1 und die zweite Schwelle S2 wurden von einer Bedienperson, über die Tastatur TSM, für das Steuermittel SM festgelegt. Für die Wahrscheinlichkeiten, die zwischen dem linken Punkt WL und der ersten Schwelle S1 liegen, bestimmt das Feststellmittel FM das Vorliegen von Kleinbild-Vollformat. Für die Wahrscheinlichkeiten, die zwischen der zweiten Schwelle S2 und dem rechten Punkt WH liegen, bestimmt das Feststellmittel das Vorliegen von Kleinbild-Panoramaformat. In einem Bereich FE1 der Wahrscheinlichkeiten, die zwischen der ersten Schwelle S1 und der zweiten Schwelle S2 liegen, ist es für das Feststellmittel FM nicht eindeutig feststellbar, ob ein Vollformat oder ein Panoramaformat bei dem untersuchten Bild vorliegt. Dieses Erkennen eines Panoramaformats ist insbesondere bei stark unterbelichteten Bildern kritisch. Das Erkennen des Panoramaformates kann insbesondere deshalb vorteilhaft sein, da das Panoramaformat im Vergleich zum Vollformat das jeweilige Bild mit einer unterschiedlichen Auflösung weiterverarbeitet werden kann. Des Weiteren kann es vorteilhaft sein, bei dem Vorliegen eines Panoramaformats einen Streulichtschutz in den Strahlengang des Scanners einzufahren, sofern die Abbildungsoptik des Scanners nicht streulichtarm genug ist.

Um eine fälschlicherweise durchgeführte Verarbeitung eines Vollformatbildes oder eines Panoramformatbildes zu verhindern, wird, sofern die Panoramaerkennungslogik der Verarbeitungsalogrithmen des Steuermittels SM eine Wahrscheinlichkeit ausgibt, die in dem Bereich FE1 zwischen der ersten Schwelle S1 und der zweiten Schwelle S2 liegt, das Bild aus dem Arbeitsfluss der herkömmlichen Verarbeitung aussortiert. Das aussortierte Bild wird dem Inspektionsplatz C zugeleitet, damit eine Bedienperson feststellen kann, ob es sich um ein Vollformat- oder Panoramaformatbild handelt. Der erste Bereich FE1 mit fehlender Eindeutigkeit beim Vorliegen des Formates des Bildes ist hier relativ groß gefasst, so dass eine relativ große Anzahl von Bildern aussortiert wird. Dabei ist allerdings gewährleistet, dass eine große Anzahl von Bildern tatsächlich korrekt verarbeitet und somit eine hohe Qualität bei der Erzeugung der Bilder gewährleistet ist.

Soll die Anzahl der aussortierten Bilder geringer sein, so dass eine größere Anzahl von Bildern automatisch weiterverarbeitet wird, ohne dem Inspektionsplatz zugeleitet zu werden, so ist es möglich, die Schwellen zum Festlegen des Bereiches mit fehlender Eindeutigkeit zu verändern. Diese Veränderung kann z. B. von einer Bedienperson über die Tastatur TSM vorgenommen werden. Es ist insbesondere auch möglich, die Einstellung der Schwellen automatisch vom System L vornehmen zu lassen. Dies kann beispielsweise dadurch erfolgen, dass eine bestimmte Anzahl von in dem Speicher SP2 abspeicherbarer Bilder vorgebbar ist, bei deren Erreichen die Schwellen vom Steuermittel SM so eingestellt werden, dass weniger Bilder vom Aussortiermittel AS aussortiert werden. In der Fig. 2 ist ein zweiter Bereich FE2 mit fehlender Eindeutigkeit zur Bestimmung des Panoramaformats eingezeichnet. Dieser zweite Bereich FE2 wird durch eine dritte Schwelle S3 und eine vierte Schwelle S4 festgelegt. In dem Bereich zwischen dem linken Punkt WL und der dritten Schwelle S3 wird daher das Feststellmittel FM das Vorliegen eines Kleinbild-Vollformates feststellen. In dem Bereich zwischen der vierten Schwelle 4 und dem rechten Punkt WH wird das Feststellmittel FM dagegen das Vorliegen von Kleinbild-Panoramaformat feststellen. Die Bilder, bei denen die Panoramaformat-Erkennungslogik eine Wahrscheinlichkeit feststellt, die in dem Bereich FE2 liegt, werden mittels des Sortiermittels AS über den zweiten Speicher SP2 dem Inspektionsplatz C zugeleitet.

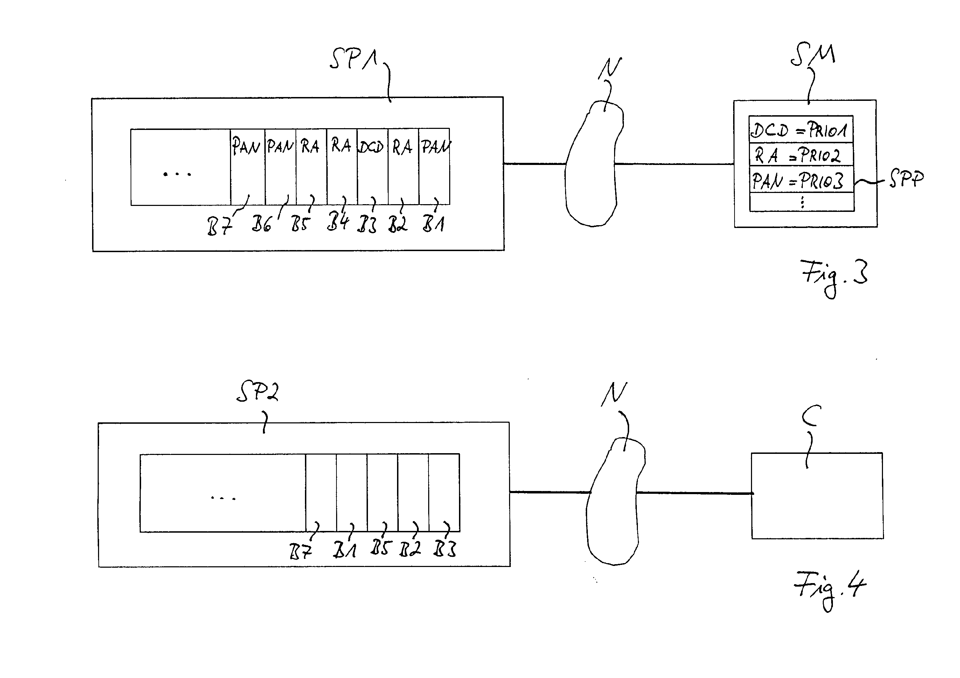

Gemäß der Erfindung ist es vorteilhafterweise möglich, den verschiedenen Eigenschaften der Bilder verschiedene Prioritäten zuzuordnen, die zum Aussortieren der Bilder in dieser Prioritätenreihenfolge dienen, sofern durch das Feststellmittel FM das Vorhandensein oder Nichtvorhandensein der jeweiligen Eigenschaften nicht eindeutig festgestellt werden kann. Dazu zeigt die Fig. 3 eine Tabelle, die in einem Speicher SPP des Steuermittels SM abgespeichert ist. Gemäß dieser Tabelle sind einer ersten Eigenschaft DCD, einer falschen Orientierung des Bildes, die beispielsweise zur Ausgabe der zugeordneten Bilddaten auf CD relevant sein kann, eine erste Priorität PRIO1, einer zweiten Eigenschaft RA, dem Vorliegen von roten Augen im Bild, eine zweite Priorität PRIO2 und einer dritten Eigenschaft PAN, dem Vorliegen eines Kleinbild-Panoramaformats, eine dritte Priorität PRIO3 zugeordnet.

Des Weiteren sind in der Fig 3 eine Vielzahl von Bilddatensätzen dargestellt, die in dem ersten Speicher SP1 abgespeichert sind. Die verschiedenen Bilddatensätze enthalten dabei jeweils diejenigen Bilddaten, die einem Bild eines fotografischen Auftrages zugeordnet sind. In dem Beispiel gemäß der Fig. 3 sind die Bilddaten eines ersten Bildes B1, eines zweiten Bildes B2, eines dritten Bildes B3, eines vierten Bildes B4, eines fünften Bildes B5, eines sechsten Bildes B6 und eines siebten Bildes B7 beispielhaft dargestellt. Die Bildverarbeitung der Verarbeitungsalgorithmen des Steuermittels SM, der die digitalen Bilddaten der verschiedenen Bilder B1 - B7 unterzogen wurden, hat bestimmte Eigenschaften dieser Bilder festgestellt. Beim ersten Bild B1 handelt es sich beispielsweise um ein Bild mit Panoramaformat, beim zweiten Bild B2 um ein Bild mit roten Augen, beim dritten Bild B3 um ein Bild, dessen Orientierung für die Ausgabe auf der CD-Station CD nicht korrekt ist, beim vierten Bild B4 um ein Bild mit roten Augen, beim fünften Bild B5 ebenfalls um ein Bild mit roten Augen, beim sechsten Bild B6 um ein Panoramaformat und beim siebten Bild B7 ebenfalls um ein Panoramaformat. Bei dem vierten Bild B4 konnte von dem Feststellmittel FM das Vorhandensein von roten Augen eindeutig festgestellt werden. Beim sechsten Bild B6 konnte von dem Feststellmittel FM das Vorhandensein des Panoramaformates ebenfalls eindeutig festgestellt werden. Das vierte Bild B4 und das sechste Bild B6 werden daher von dem Sortiermittel AS nicht aussortiert. Sie können in herkömmlicher Weise verarbeitet werden, ohne dass sie dem Inspektionsplatz C zuvor zugeleitet werden. Bei den übrigen Bildern B1, B2, B3, B5 und B7 konnten von dem Feststellmittel FM die jeweiligen Eigenschaften nicht eindeutig bestimmt werden. Ob die jeweiligen Eigenschaften dieser Bilder daher tatsächlich vorliegen, ist unsicher. Das tatsächliche Vorliegen dieser Eigenschaften kann daher vorteilhafterweise durch das Aussortieren dieser Bilder und das Weiterleiten zu dem Inspektionsplatz C festgestellt werden.

Dazu wird den Bildern, bei denen das Vorliegen der jeweiligen bestimmten Eigenschaft nicht eindeutig feststellbar war, durch das Steuermittel SM eine Priorität zur Weiterleitung an den Inspektionsplatz C zugeordnet. Diese Zuordnung erfolgt entsprechend der in dem Speicher SP abgelegten Tabelle. Im vorliegenden Beispiel gemäß der Fig. 3 wird daher dem Bild B1 die Priorität PRIO3, dem Bild B2 die Priorität PRIO2, dem dritten Bild B3 die Priorität PRIO1, dem fünften Bild B5 die Priorität PRIO2 und dem siebten Bild B7 die Priorität PRIO3 zugeordnet. Abhängig von der zugeteilten Priorität werden die Bilddatensätze der einzelnen Bilder nun in dem zweiten Speicher SP2 eingeordnet.

Fig. 4 zeigt ein Beispiel einer in dem zweiten Speicher SP2 abgespeicherten Liste der Bilddatensätze, entsprechend der ihnen zuvor durch das Steuermittel SM zugeteilten Priorität. Die Fig. 4 zeigt daher die in dieser Reihenfolge in dem zweiten Speicher SP2 abgespeicherten Bilddatensätze der Bilder B3, B2, B5, B1 und B7.

Die Bilddatensätze der Bilder B4 und B6 sind nicht in dem Speicher SP2 abgespeichert, da sie nicht dem Inspektionsplatz C zugeleitet werden. Entsprechend der Reihenfolge der Bilddatensätze in dem zweiten Speicher SP2 werden diese über das Netzwerk N an den Inspektionsplatz C weitergeleitet.

Zur flexiblen Festlegung der auszusortierenden Bilder können vorteilhafterweise verschiedene Kriterien beliebig miteinander kombiniert werden. Dies kann insbesondere automatisch durch das System L erfolgen. Kriterien können die oben beschriebene Prioritätenfestlegung, die Festlegung der Schwellen und/oder die Einstellung der Anzahl von in dem Speicher SP2 maximal abspeicherbarer Bilder sein. Durch diese Kriterien kann die Aussortierrate vorteilhafterweise auf einfache Weise eingestellt werden.

Vorteilhafterweise ist es möglich, die Reihenfolge der Bilddatensätze, in der sie in dem zweiten Speicher SP2 abgespeichert sind, auch nachträglich erneut zu ändern. Die Prioritätsreihenfolge, die in der Tabelle des Speichers SPP festgelegt ist, ist vorteilhafterweise jederzeit veränderbar. Dadurch kann eine besondere Flexibilität und Anpassung an verschiedene Anwendungsfälle erreicht werden.

Des Weiteren ist es vorteilhafterweise möglich, auch nachträglich, das heißt nach dem Einordnen eines Bilddatensatzes in die Liste des Speichers SP2, diesen Bilddatensatz aus der Liste herauszunehmen, um die zugehörigen Bilddaten unmittelbar dem Printer PR oder der Station CD zur Ausgabe zuzuleiten. Dies kann insbesondere dann vorteilhaft sein, wenn der Printer PR nicht ausreichend viele digitale Bilddaten zur Verfügung hat, um ein kontinuierliches Belichten auf Fotopapier zu gewährleisten. In diesem Fall kann es für den Betreiber des Systems L wichtiger sein, den Printer PR kontinuierlich weiterlaufen zu lassen und dafür eine eventuelle Falscherkennung einer Eigenschaft des auszugebenden Bildes in Kauf zu nehmen.

Hierzu 2 Blatt Zeichnungen

## Patentansprüche

1. Vorrichtung (L) zum Verarbeiten von Bildern (B1 - B7) eines fotografischen Auftrages mit
- einem Steuermittel (SM) zum Steuern der Verarbeitung, das
- ein Feststellmittel (FM) zum Feststellen des Vorhandenseins oder Nichtvorhandenseins einer Eigenschaft (PAN, RA, DCD) eines der Bilder (B1 - B7) des fotografischen Auftrages und
- ein Sortiermittel (AS) zum automatischen Aussortieren eines der Bilder (B1 - B7) aufweist, das so ausgestaltet ist, dass es in dem Fall, in dem das Vorhandensein oder Nichtvorhandensein der Eigenschaft (PAN, RA, DCD) von dem Feststellmittel (FM) nicht eindeutig feststellbar ist, dieses Bild (B1 - B7) aussortiert.

2. Vorrichtung nach Anspruch 1, **dadurch gekennzeichnet, dass**
das Steuermittel (SM) ein Anzeigen des aussortierten Bildes (B1 - B7) auf einer Anzeigeeinrichtung (MC) zur Überprüfung durch eine Bedienperson steuert.

3. Vorrichtung nach Anspruch 2, **dadurch gekennzeichnet, dass**
die Anzeigeeinrichtung (MC) einen Monitor umfasst.

4. Vorrichtung nach einem der Ansprüche 1 - 3, **dadurch gekennzeichnet, dass** sie ein Bearbeitungsmittel (TC) zum manuellen Bearbeiten des aussortierten Bildes (B1 - B7) durch eine Bedienperson aufweist.

5. Vorrichtung nach einem der Ansprüche 1 - 4, **dadurch gekennzeichnet, dass** sie ein Einstellmittel zum Einstellen eines bestimmten Grades (S1 - S4) der fehlenden Eindeutigkeit für das Feststellen des Vorhandenseins oder Nichtvorhandenseins der Eigenschaft (PAN, RA, DCD) aufweist, der für das Sortiermittel (AS) ein Kriterium für das Aussortieren des Bildes (B1 - B7) ist.

6. Vorrichtung nach Anspruch 5, **dadurch gekennzeichnet, dass**
der Grad mittels wenigstens eines Schwellwertes (S1 - S4) einstellbar ist.

7. Vorrichtung nach einem der Ansprüche 1 - 6, **dadurch gekennzeichnet, dass** das Sortiermittel (AS) so ausgestaltet ist, dass es das automatische Aussortieren eines der Bilder (B1 - B7) zusätzlich in Abhängigkeit von wenigstens einem weiteren vorgegebenen Kriterium ausführt.

8. Vorrichtung nach einem der Ansprüche 1 - 7, **dadurch gekennzeichnet, dass** das Sortiermittel (AS) so ausgestaltet ist, dass eine Aussortierrate des automatischen Aussortierens mehrerer der Bilder (B1 - B7) festlegbar ist.

9. Vorrichtung nach Anspruch 8, **dadurch gekennzeichnet, dass**
die Aussortierrate des automatischen Aussortierens mehrerer der Bilder (B1 - B7) in Abhängigkeit von der Auslastung der Bedienperson festlegbar ist.

10. Vorrichtung nach einem der Ansprüche 1 - 9 , **dadurch gekennzeichnet, dass** das Sortiermittel (AS) so ausgestaltet ist, dass es das Aussortieren unabhängig von dem Feststellen des Vorhandenseins oder Nichtvorhandenseins der Eigenschaft (PAN, RA, DCD) eines der Bilder (B1 - B7) durch das Feststellmittel (FM) aussetzt, sofern das Steuermittel (SM) ein Weiterverarbeiten der Bilder (B1 - B7) des fotografischen Auftrages fordert.

11. Vorrichtung nach einem der Ansprüche 1 - 10, **dadurch gekennzeichnet, dass**
das Feststellmittel (FM) so ausgestaltet ist, dass es das Vorhandensein oder Nichtvorhandensein mehrerer Eigenschaften (PAN, RA, DCD) der Bilder (B1 - B7) des fotografischen Auftrages feststellt, und eine Priorität (Prio1 - Prio3) der mehreren Eigenschaften (PAN, RA, DCD) festlegbar ist, so dass das automatische Aussortieren mittels des Sortiermittels (AS) in Abhängigkeit von der festgelegten Priorität (Prio1 - Prio3) ausführbar ist.

12. Verfahren zum Verarbeiten von Bildern (B1-B7) eines fotografischen Auftrages, bei dem
- die Verarbeitung von einem Steuermittel (SM) gesteuert wird,
- ein Vorhandensein oder Nichtvorhandensein einer Eigenschaft (PAN, RA, DCD) eines der Bilder (B1-B7) des fotografischen Auftrages festgestellt wird und
- ein automatisches Aussortieren eines der Bilder (B1-B7) in dem Fall erfolgt, in dem das Vorhandensein oder Nichtvorhandensein der Eigenschaft (PAN, RA, DCD) von dem Feststellmittel (FM) nicht eindeutig festgestellt wird.
